# DEMANDE DE BREVET EUROPEEN

(11) **EP 1 114 929 A1**
(43) Date de publication de la demande: **11.07.2001**
(21) Numéro de dépôt: 01400002.0
(22) Date de dépôt: 02.01.2001
(51) Int. Cl.: F02M 21/02

(54) **Dispositif de contrôle d'alimentation en gaz d'un injecteur de gaz**

(30) Priorité: 03.01.2000 FR 0000003
(71) Demandeur: Renault, 92100 Boulogne Billancourt (FR)
(72) Inventeur: Agneray, André, 92100 Boulogne Billancourt (FR); Maissant, Jean Pierre, 92500 Rueil Malmaison (FR); Vittori, Jean-François, 78140 Velizy (FR)

(57) **Abrégé**

Dispositif de contrôle d'alimentation en gaz d'un moteur à injection de gaz, comprenant, à l'intérieur d'un corps 1 présentant une entrée 2 de gaz sous pression et au moins une sortie 3 de gaz, un organe obturateur 12 mobile qui contrôle le passage de gaz entre l'entrée de gaz et la sortie de gaz, cet organe étant amené d'une position de fermeture à laquelle il est en contact avec un siège 11 définissant la sortie de gaz, à une position d'ouverture par la force d'attraction d'un élément d'actionnement 4, 5 électromagnétique tel qu'un solénoïde.

L'organe obturateur est constitué par un plateau 12 de révolution en matériau ferromagnétique monté librement mobile en translation suivant son axe, avec effet de guidage, entre ledit élément d'actionnement 4, 5 et ledit siège 11 et dimensionné de manière que lors de la désexcitation dudit élément 4, 5, le plateau 12 soit amené et maintenu à la position de fermeture principalement par l'effet de rappel dû à la différence des pressions de gaz agissant sur ses deux faces.

Application : aux injecteurs et doseurs distributeurs.

## Description

La présente invention concerne le contrôle d'alimentation en gaz de moteurs à injection de gaz de véhicules automobiles.

Les systèmes récents d'alimentation en phase gazeuse de GPL (gaz de pétrole liquéfié) ou de GNV (gaz naturel pour véhicules) sont de type multipoint (un injecteur par cylindre) ou monopoint distribué (un seul injecteur appelé doseur-distributeur à n sorties, n étant égal au nombre de cylindres du moteur).

Le débit de gaz contrôlé par ces injecteurs ou doseurs-distributeurs est fonction du temps d'ouverture et de la section de passage du dispositif de contrôle, ainsi que de la pression et de la température en amont de ce dispositif. La pression en aval n'intervient que si le dispositif de contrôle fonctionne en débit subsonique, ce qui n'est pas souhaitable du point de vue de la maîtrise du dosage du gaz, notamment durant les phases transitoires du moteur.

A l'heure actuelle, les dispositifs de contrôle d'alimentation les plus performants, du point de vue dynamique et du point de vue insensibilité à l'encrassement, sont conçus généralement sur le principe d'une soupape (ou grosse aiguille d'injecteur) dont l'ouverture est commandée par un solénoïde et dont la fermeture s'effectue sous l'action d'un ressort de rappel.

Ces dispositifs de contrôle posent des problèmes de conception et sont généralement encombrants, notamment du fait de la présence du ressort de rappel. De plus, ils nécessitent des solénoïdes puissants, donc encombrants, pour pouvoir fournir les forces d'attraction électromagnétiques nécessaires. Leur commande est complexe et onéreuse. La puissance thermique à évacuer est élevée, ce qui rend leur utilisation délicate en ambiance chaude (par exemple sous un capot de moteur) sans mise en place de radiateurs dissipateurs d'énergie, également encombrants. La dynamique de débit de ces dispositifs est réduite du fait des masses importantes en mouvement (on considère généralement que 1/3 de la masse des ressorts entre en ligne de compte des masses en mouvement). De ce fait, il n'est pas rare d'être amené à piloter ces dispositifs en "balistique" aux faibles débits, c'est-à-dire qu'on ferme le dispositif avant qu'il n'ait eu le temps de s'ouvrir entièrement, ce qui n'est pas sans poser des problèmes de robustesse et de fiabilité du contrôle de débit.

Le but de la présente invention est de réaliser un dispositif de contrôle d'alimentation en gaz qui se distingue notamment par une réduction des masses en mouvement, permettant ainsi d'éliminer les problèmes résultant de l'importance des masses en mouvement (puissance des solénoïdes, dissipation de chaleur, encombrement, inertie).

Le dispositif de contrôle d'alimentation en gaz, objet de l'invention, pour un moteur à injection de gaz, comprend, à l'intérieur d'un corps présentant une entrée de gaz sous pression et au moins une sortie de gaz, un organe obturateur mobile qui contrôle le passage de gaz entre l'entrée de gaz sous pression et la sortie de gaz, cet organe étant amené d'une position de fermeture à laquelle il est en contact avec un siège définissant la sortie de gaz, à une position d'ouverture par la force d'attraction d'un élément d'actionnement électromagnétique tel qu'un solénoïde. Ledit organe obturateur est constitué par un plateau de révolution en matériau ferromagnétique monté librement mobile en translation suivant son axe, avec effet de guidage, entre ledit élément d'actionnement et ledit siège et étant dimensionné de manière que lors de la désexcitation de l'élément d'actionnement, le plateau soit amené de la position d'ouverture à la position de fermeture et soit maintenu à la position de fermeture principalement par le seul effet de rappel dû à la différence des pressions de gaz agissant sur ses deux faces.

Dans le cadre de l'invention, le dispositif de contrôle d'alimentation peut utiliser, soit un grand plateau, à savoir un plateau dont la section est supérieure à la section du siège de sortie, soit un petit plateau, à savoir un plateau dont la section est sensiblement égale à la section du siège de sortie.

Dans le premier cas, le plateau est sollicité sur une première face par la pression d'entrée de gaz et, sur sa seconde face, dans sa partie centrale correspondant au siège de sortie par la pression de sortie de gaz (pression collecteur) et autour du siège de sortie par une pression égale à la pression d'entrée de gaz lorsque le débit de gaz est nul et égale à une pression plus faible variant sensiblement avec le carré du débit de gaz lorsque ce dernier existe.

Dans le second cas, le plateau est sollicité sur sa première face par la pression d'entrée de gaz et sur sa seconde face uniquement par la pression de sortie de gaz (pression collecteur).

Dans le second cas, compte tenu en particulier de la masse plus réduite du plateau (pour une même épaisseur du plateau, une même levée du plateau et une même section de sortie de gaz), le rapport des forces de maintien du plateau sur le siège, par rapport au poids du plateau et des forces dues aux vibrations du moteur, est plus élevé que dans le premier cas.

A titre d'exemple, pour un diamètre du siège de sortie de gaz égal à 6 mm (ce qui correspond àune section de 28,3 mm²), le plateau peut, dans le premier cas, avoir par exemple un diamètre de 20 mm pour une épaisseur de 1 mm, un poids d'environ 2,5 g et une levée de 0,4 mm, et dans le second cas, un diamètre de 8 mm pour une épaisseur de 1 mm, un poids d'environ 0,4 g et une levée de 0,4 mm.

Dans un cas comme dans l'autre, quel que soit le type de régulation de la pression de sortie du détendeur ( par exemple de façon classique régulation à pression constante, voisine de 2 bars, régulation à une pression égale à 1 bar + pression collecteur, ou régulation à une pression égale à 1,9 x pression collecteur), les temps de descente du plateau sur le siège sont très réduits et sont largement compatibles avec les durées d'injection.

Les avantages que l'utilisation, comme organe obturateur, d'un plateau librement mobile en tant que seule pièce en mouvement, de faible inertie, sans ressort ou autre moyen de rappel, procure au dispositif conforme à l'invention sont, en particulier:
- une dynamique de débit très élevée, voire extrêmement élevée dans le cas du petit plateau,
- une fréquence de résonance élevée, voire très élevée dans le cas du petit plateau, fréquence bien adaptée à la mise en place sur moteur,
- une faible sensibilité à la température puisqu'il n'existe aucune liaison entre le plateau et son logement,
- un dimensionnement optimal du dispositif de contrôle d'alimentation,
- une optimisation de l'énergie et de la puissance électrique nécessaire au fonctionnement, du fait de l'optimisation des efforts de rappel du plateau sur son siège, d'où
   . une meilleure dissipation thermique due à la moindre puissance calorifique à évacuer, et
   . une faible puissance de commande, bien adapté au standard automobile,
- une perte de charge très réduite, en amont de l'organe de dosage (plateau), ce qui facilite un fonctionnement du dispositif en régime sonique.

Pour éviter le collement du plateau côté solénoïde, des moyens sont avantageusement prévus pour permettre à la pression d'entrée de gaz d'agir sur la première face du plateau, en position d'ouverture de ce dernier.

Lesdits moyens peuvent comprendre, par exemple, un passage à travers le solénoïde, communiquant avec l'entrée de gaz et débouchant sur la première face du plateau.

Lesdits moyens peuvent également comprendre, par exemple, plusieurs saillies sous le solénoïde, par exemple réparties sur un cercle.

De préférence, des butées constituées par un matériau amortisseur, par exemple un élastomère, peuvent être prévues sous le solénoïde pour amortir les chocs du plateau lors du passage de ce dernier en position d'ouverture.

L'invention est applicable, non seulement aux injecteurs, mais également au doseurs-distributeurs à plusieurs sorties, auquel cas la distribution sur les sorties peut s'effectuer, soit au niveau du siège, donc au niveau du dosage, soit en aval du siège.

En se référant aux dessins schématiques annexés, on va décrire ci-après, plus en détail, plusieurs modes de réalisation d'un dispositif de contrôle d'alimentation conforme à l'invention; sur les dessins :
- les figures 1 et 2 représentent un premier mode de réalisation du dispositif, respectivement en position d'ouverture et en position de fermeture;
- les figures 3 et 4 représentent un deuxième mode de réalisation du dispositif, respectivement en position d'ouverture et en position de fermeture;

les figures 5 et 6 représentent un troisième mode de réalisation du dispositif, respectivement en position d'ouverture et en position de fermeture;
la figure 7 représente encore un autre mode de réalisation du dispositif;
la figure 8 représente un dispositif suivant les figures 1 et 2, à plusieurs sorties;
la figure 9 représente un dispositif selon les figures 5 et 6, à plusieurs sorties.

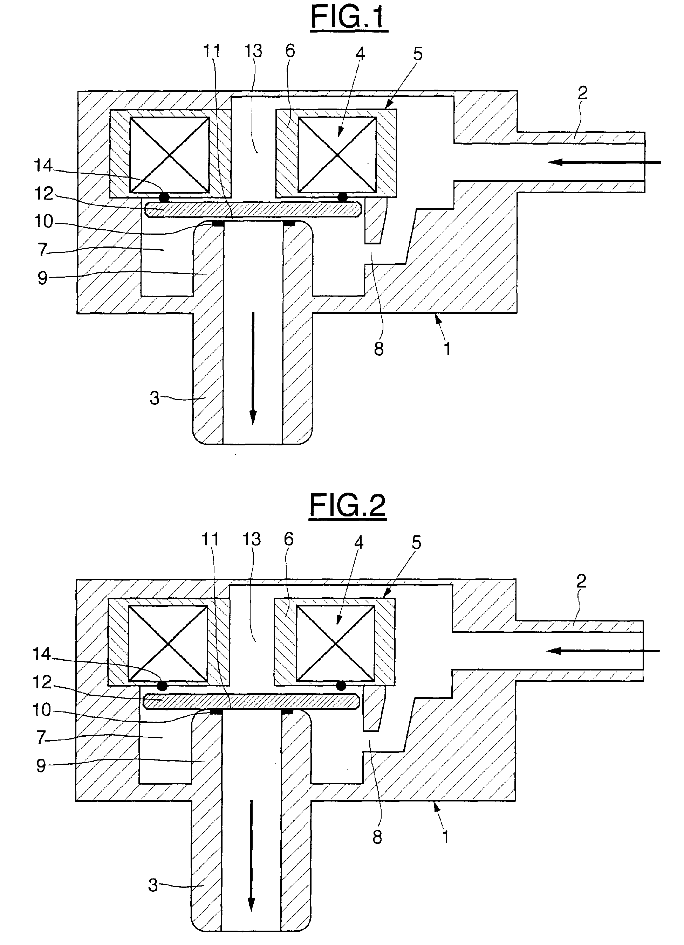

Tel qu'illustré par les figures 1 et 2, un dispositif de contrôle d'alimentation d'un moteur à injection de gaz, comprend un corps 1 en matériau amagnétique comportant une entrée de gaz sous pression 2 et une sortie de gaz 3. A l'intérieur du corps 1 est disposé un solénoïde 4 monté à l'intérieur d'un circuit magnétique 5 comprenant un noyau 6 passant à l'intérieur de la bobine annulaire du solénoïde 4.

Le corps 1 délimite, en dessous du circuit magnétique 5, une chambre 7 qui communique avec l'entrée 2 par un canal 8 et entoure une tubulure 9 reliée à la sortie 3 et faisant saillie depuis le bas à l'intérieur de la chambre 7. L' extrémité intérieure de la tubulure 9, pourvue d'un joint d'étanchéité 10, constitue, à distance en dessous du circuit magnétique 5, un siège 11 pour un clapet 12 monté entre le siège 11 et le circuit magnétique 5.

Le clapet 12 est réalisé sous la forme d'un plateau circulaire en matériau ferromagnétique, de diamètre supérieur au diamètre du siège 11 et d'une épaisseur inférieure à la distance séparant le siège 11 du circuit magnétique 5. Le plateau 12 est librement mobile en translation suivant son axe entre le circuit magnétique 5 et le siège 11, en étant guidé (centré) à l'intérieur de la chambre 7 entourant la tubulure 9.

Le noyau 6 du circuit magnétique 5 est traversé par un passage 13 qui communique avec l'entrée 2 et qui débouche sur la face inférieurs du circuit 5 en regard du plateau 12. Une butée 14 à effet amortisseur constituée par exemple par un joint d'étanchéité annulaire est par ailleurs disposée, autour du passage 13, en saillie sur le côté inférieur du circuit magnétique 5, en regard du plateau 12.

Lors de l'excitation du solénoÏde 4, le plateau 12 est attiré contre le circuit magnétique 5 et maintenu contre la butée 14 pour dégager le siège 11 et permettre ainsi une communication de l'entrée 2 avec la sortie 3 à travers le canal 8.

Lors de la désexcitation du solénoïde 4, le plateau 12 est rappelé sur le siège 11 par l'effort dû principalement à la différence des pressions agissant sur ses deux faces. Le passage 13 permet à la pression de gaz dans l'entrée 2 d'agir sur la face du plateau 12 tournée vers le circuit magnétique 5, malgré la présence du joint 14, empêchant ainsi le plateau 12 de coller au circuit magnétique 5.

En position fermée, la dépression dans le collecteur d'admission relié à la sortie 3, est suffisante au maintien du plateau 12 sur le siège 11. L'action, sur le plateau, des forces dues aux vibrations éventuelles du moteur, reste faible face aux forces de pressions mises en jeu. Il en est de même en ce qui concerne le poids du plateau face aux forces en présence.

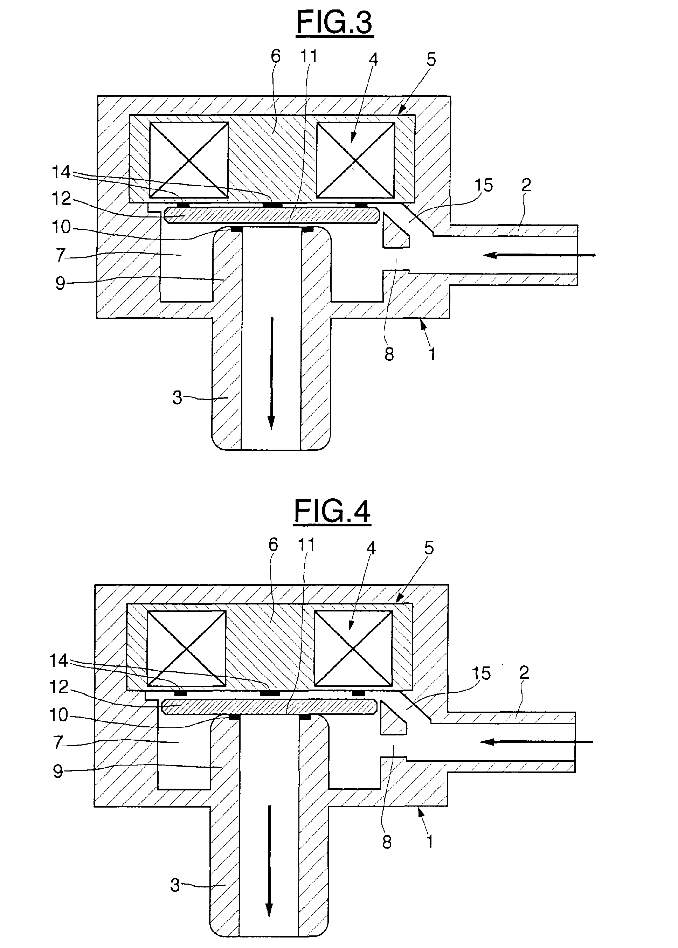

Le mode de réalisation suivant les figures 3 et 4 diffère du mode de réalisation des figures 1 et 2, par le fait que pour permettre à la pression dans l'entrée 2 d'agir sur la face supérieure du plateau 12, le circuit magnétique 5, plutôt que de comporter dans son noyau 6 un passage (13) communiquant avec l'entrée 2, porte ici, sur sa face tournée vers le plateau 12, au lieu d'un joint annulaire, plusieurs saillies discrètes sous forme de plots 14, de préférence élastiques, par exemple en élastomère, réparties sur un cercle, ce qui permet à la pression de gaz dans l'entrée 2 de se propager, à travers un passage 15 du corps 1 et en passant entre les plots 14, dans l'espace situé entre la face inférieure du circuit magnétique 5 et la face supérieure du plateau 12 attiré contre les plots 14 par l'action du solénoïde 4.

A part ces différences, le dispositif sur les figures 3 et 4 correspond au dispositif suivant les figures 1 et 2.

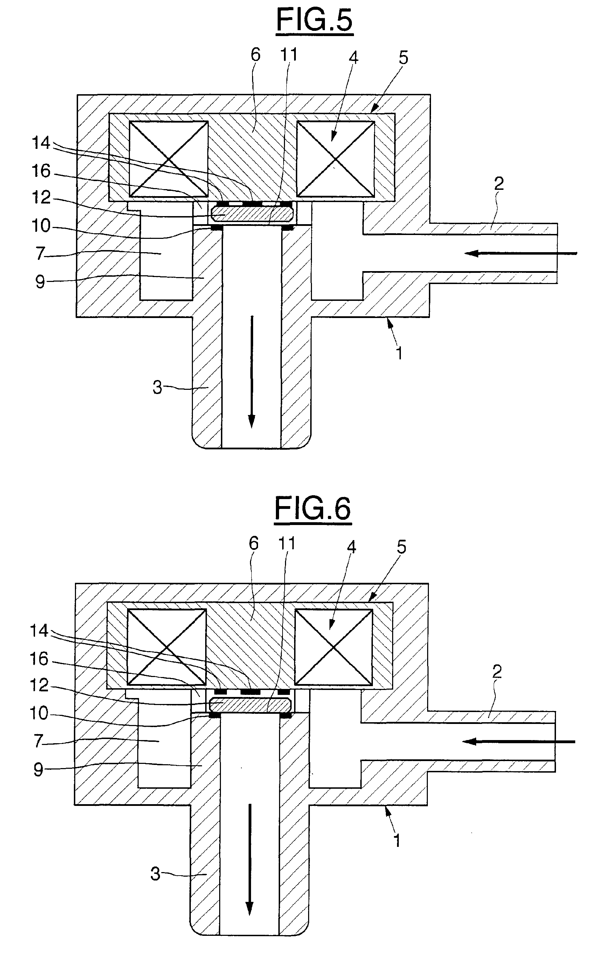

Suivant le mode de réalisation des figures 5 et 6, le plateau 12 présente un diamètre très légèrement supérieur au diamètre du siège 11, mais inférieur au diamètre extérieur de la tubulure 9, de manière que seule la pression dans la sortie 3 puisse agir sur la face inférieure du plateau 12 pour rappeler ce dernier sur le siège 11. Pour le guidage du plateau 12, la tubulure 9 est prolongée vers le haut au-delà du siège 11, autour du plateau 12, jusqu'à la face inférieure du circuit magnétique 5, par une partie ajourée laissant subsister plusieurs lumières 16 qui permettent à la pression de gaz dans l'entrée 2, donc dans la chambre 7, de se propager entre la face inférieure du circuit magnétique 5 et la face supérieure du plateau 12 , ce dernier étant maintenu légèrement espacé de la face inférieure du circuit magnétique 5 par plusieurs plots amortisseurs 14 répartis sur un cercle.

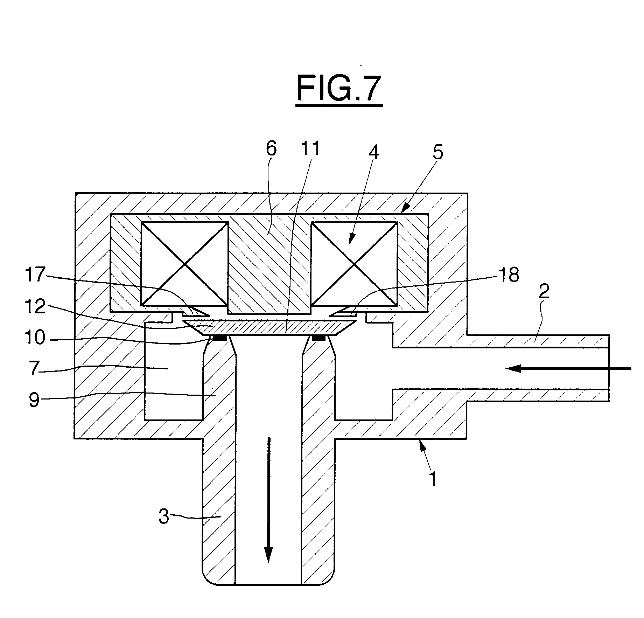

Sur le dispositif suivant la figure 7, on retrouve la structure générale du mode de réalisation des figures 5 et 6, mais le profil du plateau 12 et la conformation de la partie correspondante du circuit magnétique 5 sont adaptés pour optimiser l'action du solénoïde sur le plateau.

Le circuit magnétique 5 est ici interrompu, en face du plateau 12, entre le noyau central 6 et l'armature entourant le solénoïde 4, l'armature formant en face du plateau 12, autour du noyau 6, un épanouissement polaire 17 de forme annulaire. Le plateau 12 présentant en coupe transversale un profil en trapèze allant en s'élargissant vers le haut, en conformité avec l'épanouissement polaire 17. L'architecture proposée autorise un auto-centrage du plateau sous l'effet des forces magnétiques, par création de champs magnétiques ad hoc, grâce à une conformation spécifique du circuit magnétique et du plateau.

Pour permettre à la pression de gaz à l'entrée 2 de se propager sur la face supérieure du plateau 12, en position d'ouverture, c'est-à-dire lorsque le plateau est attiré par le circuit magnétique et se trouve plaqué contre l'épanouissement polaire 17, ce dernier comporte plusieurs rainures radiales 18 ménagées dans sa face inférieure.

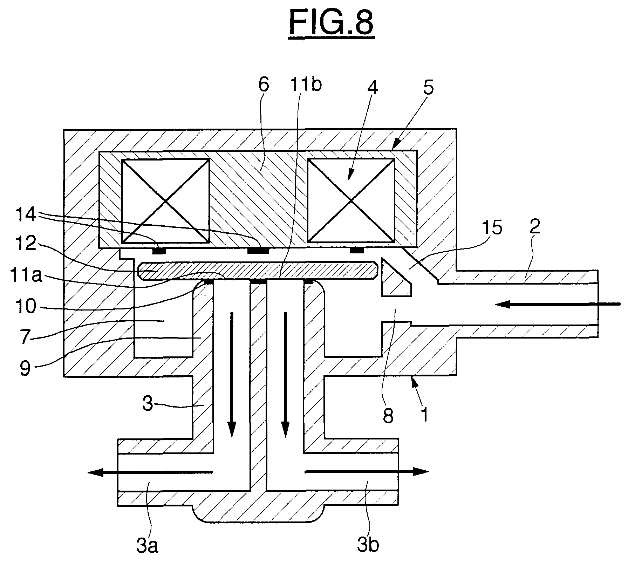

Le dispositif suivant la figure 8 correspond au dispositif suivant les figures 3 et 4, sauf que le plateau 12 coopère avec une tubulure 9 qui, au lieu d'un seul siège, comporte ici plusieurs sièges (seuls deux sièges 11a et 11b sont visibles) débouchant dans plusieurs sorties (seules les sorties 3a et 3b sont visibles), ces sorties communiquant respectivement avec des cylindres différents d'un même moteur. Il s'agit donc là d'un doseur-distributeur à plusieurs sorties.

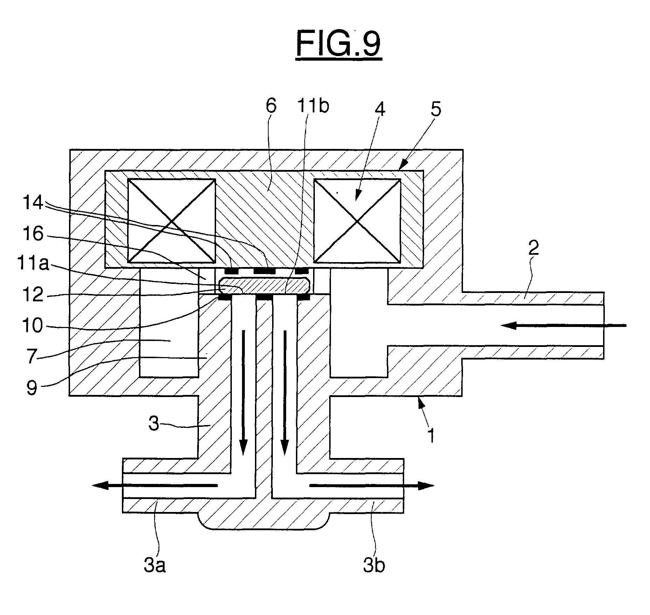

La figure 9 illustre un mode de réalisation qui correspond au mode de réalisation suivant les figures 5 et 6, sauf que le plateau 12 coopère ici également avec plusieurs sièges (11a, 11b) débouchant dans plusieurs sorties (3a, 3b).

Il est également possible, dans le cadre de l'invention, de réaliser un doseur-distributeur à n sorties avec un unique plateau 12 suivant l'un quelconque des modes de réalisation représentés et décrits, coopérant avec un siège 11 unique, en effectuant la division en n sorties non pas au niveau du siège, comme suivant les figures 8 et 9, mais seulement en aval du siège unique.

## Revendications

1. Dispositif de contrôle d'alimentation en gaz d'un moteur à injection de gaz, comprenant, à l'intérieur d'un corps présentant une entrée de gaz sous pression et au moins une sortie de gaz, un organe obturateur mobile qui contrôle le passage de gaz entre l'entrée de gaz et la sortie de gaz, cet organe étant amené d'une position de fermeture sur un siège définissant la sortie de gaz, à une position d'ouverture contre un élément d'actionnement électromagnétique tel qu'un solénoïde par la force d'attraction de cet élément, caractérisé par le fait que ledit organe obturateur est constitué par un plateau (12) de révolution en matériau ferromagnétique monté librement mobile en translation suivant son axe, avec effet de guidage, entre ledit élément d'actionnement (4, 5) et ledit siège (11) de manière à pouvoir être en appui contre l'élément d'actionnement par une première face en position d'ouverture et contre le siège par une seconde face en position de fermeture, et que des moyens (13, 14, 18) sont prévus pour permettre à la pression d'entrée de gaz, en position d'ouverture du plateau (12), de se propager entre l'élément d'actionnement (4, 5) et la première face du plateau (12) et d'agir sur ladite première face pour amener le plateau (12), lors de la désexcitation de l'élément d'actionnement, de la position d'ouverture à la position de fermeture et le maintenir à la position de fermeture par l'effet de rappel dû à la différence des pressions de gaz agissant sur ses deux faces.

2. Dispositif suivant la revendication 1, caractérisé par le fait que ledit plateau (12) présente un diamètre supérieur au diamètre dudit siège (11), la première de ses faces étant sollicitée par la pression d'entrée de gaz et sa seconde face étant sollicitée dans sa partie centrale correspondant au siège par la pression de sortie de gaz et autour du siège par une pression égale à la pression d'entrée de gaz lorsque le débit de gaz est nul et égale à une pression plus faible variant sensiblement avec le carré du débit de gaz lorsque ce dernier existe.

3. Dispositif suivant la revendication 1, caractérisé par le fait que ledit plateau présente un diamètre sensiblement égal au diamètre dudit siège (11), sa première face étant sollicitée par la pression d'entrée de gaz et sa seconde face étant sollicitée par la pression de sortie de gaz.

4. Dispositif suivant l'une quelconque des revendications 1 à 3, caractérisé par le fait que lesdits moyens comprennent un passage (13) à travers ledit élément d'actionnement (4, 5), communiquant avec l'entrée de gaz (2) et débouchant en regard de la première face du plateau (12).

5. Dispositif suivant l'une quelconque des revendications 1 à 3, caractérisé par le fait que lesdits moyens comprennent plusieurs parties en saillie (14) ou en creux (18) réparties sous l'élément d'actionnement (4, 5) en regard de la première face du plateau (12).

6. Dispositif suivant l'une quelconque des revendications précédentes, caractérisé par le fait qu'il comprend des butées (14) en un matériau amortisseur sur l'élément d'actionnement (5), en regard de la première face du plateau (12).

7. Dispositif suivant l'une quelconque des revendications précédentes, caractérisé par le fait que le plateau (12) commande le passage de gaz vers plusieurs sorties de gaz (3a, 3b).

8. Dispositif suivant l'une quelconque des revendications précédentes, caractérisé par un auto-centrage du plateau (12) par la création de champs magnétiques ad hoc grâce à la conformation de l'élément d'actionnement et/ou du plateau (figure 7).
